Europäisches Patentamt

European Patent Office

Office européen des brevets

(11) Veröffentlichungsnummer: **0 229 385**

**A1**

(12) # EUROPÄISCHE PATENTANMELDUNG

(21) Anmeldenummer: **86118004.0**

(22) Anmeldetag: **23.12.86**

(51) Int. Cl.³: **B 65 B 9/20**
**B 65 G 69/16**

(30) Priorität: **16.01.86 DE 3601104**

(43) Veröffentlichungstag der Anmeldung:
**22.07.87 Patentblatt 87/30**

(84) Benannte Vertragsstaaten:
**CH DE ES GB IT LI NL**

(71) Anmelder: **ROBERT BOSCH GMBH**
**Postfach 50**
**D-7000 Stuttgart 1(DE)**

(72) Erfinder: **Roovers, Gysbertus Cornelis F.**
**Dr. Poelstraat 17**
**NL-6006 2D Weert(NL)**

(54) **Vorrichtung zum Herstellen von Beutelpackungen.**

(57) Eine Vorrichtung zum Herstellen von Schlauchbeutel-packungen hat einen Formdorn (13), um den eine Pack-stoffbahn (1) zu einem Schlauch (2) geformt und dessen Ende (3) mit jeweils einer Füllgutmenge (5) befüllt und vom Schlauch abgetrennt wird. Zum schonenden und schnellen Durchführen der Füllgutmengen durch den hohlen Formdorn ist in diesem eine Fördereinrichtung (20) angeordnet. Die Fördereinrichtung hat mehrere in gleichen Abständen an zwei Zahnriementrieben (23) angelenkte Klappen (24), welche in einem Förderkanal (40) des Formdorns (13) nach unten bewegte Kammern begrenzen, Füllgutmengen aufneh-men und diese zum unteren Ende des Formdorns fördern, sowie in aufrechter Stellung durch einen relativ schmalen Rücklaufkanal (41) im Formdorn wieder nach oben zurückl-aufen.

FIG.1

EP 0 229 385 A1

R. 20369
12.12.1985 Gl/Pi

ROBERT BOSCH GMBH, 7000 STUTTGART 1

## Vorrichtung zum Herstellen von Beutelpackungen

Stand der Technik

Die Erfindung geht aus von einer Vorrichtung zum Herstellen von Beutelpackungen nach der Gattung des Hauptanspruchs. Bei einer beispielsweise aus der DE-OS 29 08 225 bekannten Vorrichtung dieser Art ist in dem Formdorn ein Förderbehälter auf- und abbewegbar, in den jeweils eine Füllgutmenge in seiner oberen Stellung eingebracht und in seiner unteren Stellung am Auslaß des Formdorns durch Öffnen seines Bodens in das dort gebildete Schlauchende entleert wird. Bei der bekannten Vorrichtung ist zwar die Abschütthöhe des Füllguts durch den Transport mit dem Förderbehälter sehr gering, so daß das Produkt unter schonender Behandlung in die Verpackung überführt wird, sie hat aber den Nachteil, daß ihre Ausbringung sehr niedrig ist. Wegen des im Formdorn auf- und abbewegten Förderbehälters ist die Ausbringung sogar niedriger als bei einer durch die EP-A 57 768 bekannten Schlauchbeutelherstellvorrichtung, bei der die Füllgutmengen durch die gesamte Höhe des Fülldorns in das Schlauchende abgeschüttet werden, wobei die Füllgutmengen in die Länge gezogen werden.

...

## Vorteile der Erfindung

Die erfindungsgemäße Vorrichtung zum Herstellen von Schlauchbeutelpackungen mit den kennzeichnenden Merkmalen des Hauptanspruchs hat demgegenüber den Vorteil, daß selbst bei schonender Überführung einer abgemessenen Füllgutmenge durch das
Formrohr in das Schlauchende, aus dem eine Schlauchbeutelpackung geformt wird, eine sehr hohe Ausbringung erzielt
wird. Die beweglichen Wände teilen nämlich im Formrohr mehrere sich nach unten bewegende Kammern ab, die jeweils eine
Füllgutmenge aufnehmen, so daß bei enger Aufeinanderfolge
der Mengen bei relativ niedriger Geschwindigkeit eine hohe
Abfülleistung erzielt wird. Da die einzelnen Mengen außerdem
kompakt in den Kammern zusammengefaßt sind, im Gegensatz zum
Hindurchschütten der Mengen durch ein Formrohr, ist die Übergabedauer beim Füllen einer Kammer am oberen Ende des Formdorns und beim Entleeren am unteren Ende des Formdorns wegen
der geringen Fallhöhe sehr kurz.

Durch die in den Unteransprüchen aufgeführten Merkmale sind
vorteilhafte Weiterbildungen und Verbesserungen der im Hauptanspruch angegebenen Vorrichtung möglich. Besonders vorteilhaft ist es, daß die an den Zugmitteln angelenkten Wände für
ihren Rückweg im Formdorn einen Kanal mit geringer Weite benötigen, so daß dem Förderkanal zum Überführen der Füllgutmengen der größte Teil des Hohlraums des Formdorns zur Verfügung steht.

Bei der Ausgestaltung der Wände aus einem flexiblen Material ergibt sich der weitere Vorteil, daß die Wände durch
Biegen zu einer Art Rinne beim Einlaufen in den Förderkanal eine eindeutige Sperr- und Dichtlage unter Spannung einnehmen und daß sie beim Auslaufen aus dem Kanal wieder ihre
flache Form annehmen, in der sie ohne großen Raumbedarf durch
den engen Rücklaufkanal an die Aufnahmestelle zugeführt werden können.

...

0229385

## Zeichnung

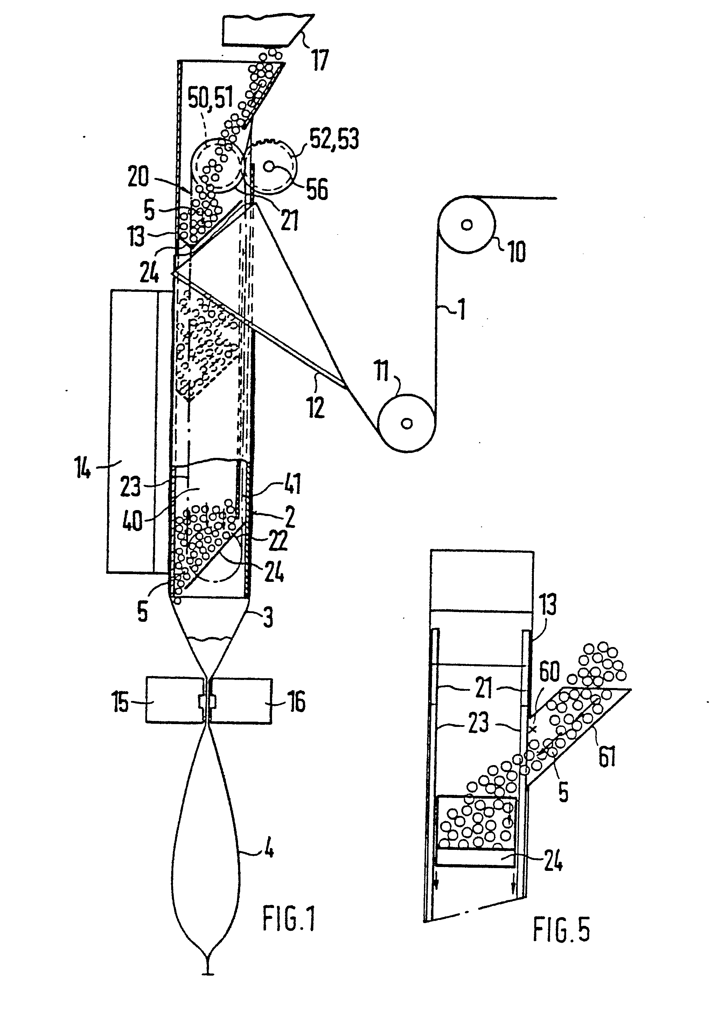

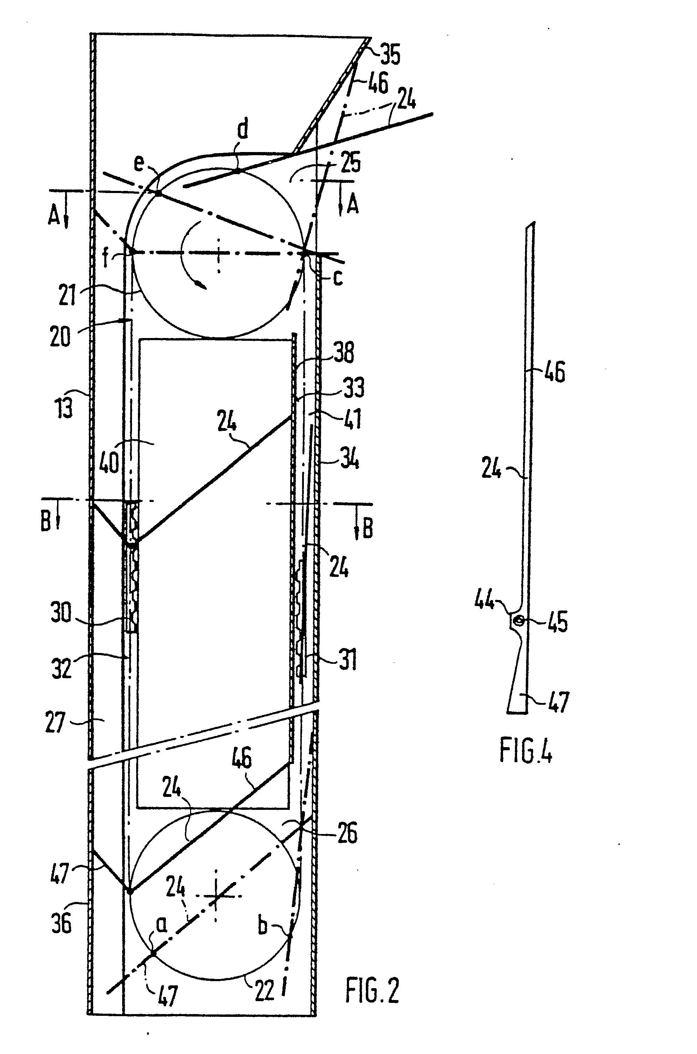

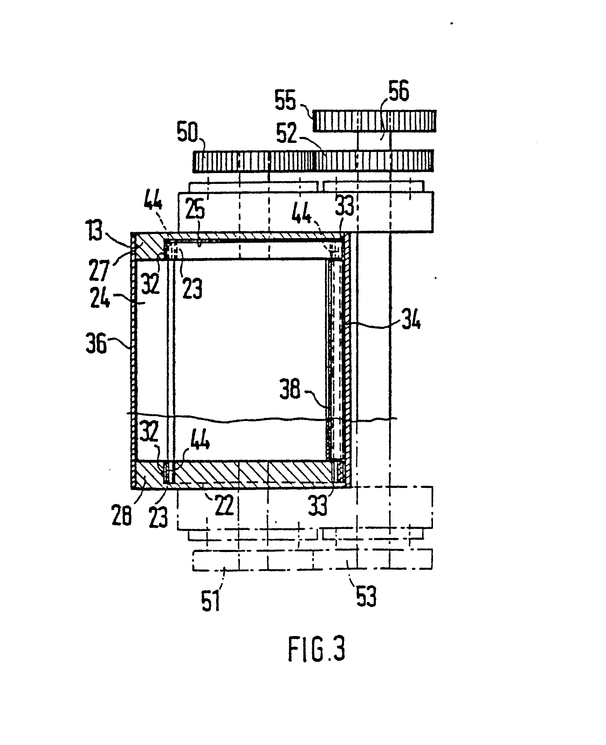

Ein Ausführungsbeispiel der Erfindung ist in der Zeichnung dargestellt und in der nachfolgenden Beschreibung näher erläutert. Es zeigen Figur 1 eine Schlauchbeutelherstellvorrichtung vereinfacht in Seitenansicht, teilweise im Schnitt, Figur 2 einen Formdorn der Schlauchbeutelherstellvorrichtung nach Figur 1 im Längsschnitt, Figur 3 der Formdorn nach Figur 2 im Querschnitt in den Ebenen A-A und B-B der Figur 2, Figur 4 eine Trennwand in Seitenansicht und Figur 5 ein weiteres Ausführungsbeispiel des Formdorns im Längsschnitt.

## Beschreibung der Ausführungsbeispiele

Eine von einer nicht dargestellten Vorratsrolle ablaufende Packstoffbahn 1 wird über Umlenkwalzen 10, 11 um eine Formschulter 12 geführt, welche einen Formdorn 13 umgibt und um diesen die Packstoffbahn 1 zu einem Schlauch 2 formt. Ein dem Formdorn 13 zugeordneter Längssiegelbacken 14 verschweißt die beiden überlappenden Ränder der Packstoffbahn 1 zu einer Längsnaht und ein Quersiegelbackenpaar 15, 16 teilt das am unteren Ende des Formdorns 13 vorstehende Schlauchende 3 nach Einfüllen je einer Füllgutmenge durch den hohlen Formdorn 13 in einzelne Beutelpackungen 4 ab. Zum Vorziehen des Schlauches 2 auf dem Formdorn 13 um je eine Beutellänge ist das Quersiegelbackenpaar 15, 16 auf- und abbewegbar angeordnet. Das Vorziehen des Schlauches 2 kann aber auch mit dem Formdorn 13 zugeordneten Förderbändern erfolgen, die taktweise den Schlauch 2 jeweils um eine Beutellänge nach unten ziehen.

Zum Hindurchführen der von einer Abmeßeinrichtung 17 nach Gewicht oder Volumen abgemessenen Füllgutmengen 5, die aus einem stückigen Produkt bestehen, in das am unteren Ende des Formdorns 13 überstehende und abgezogene Schlauchende 3

...

ist in dem Formdorn 13 eine jeweils mehrere Füllgutmengen getrennt aufnehmende Fördereinrichtung 20 angeordnet.

Die Fördereinrichtung 20 hat zwei parallel verlaufende Zahnriementriebe, die je aus einem oberen und einem unteren Zahnrad 21, 22 und je aus einem über jedes Zahnradpaar geführten endlosen Zahnriemen 23 bestehen, und aus zwischen den beiden Zahnriemen 23 angeordneten und an diesen angelenkten Klappen 24. Die Zahnräder 21, 22 sitzen drehbar in Aussparungen 25, 26 der verhältnismäßig dicken Seitenwände 27, 28 des ein reckteckiges Kastenprofil aufweisenden Formdorns 13. Die jeweils beiden zwischen jeweils einem Zahnradpaar 21, 22 geführten parallelen Trume 30, 31 der Zahnriemen 23 sind in Nuten 32, 33 in den Seitenwänden 27, 28 geführt, die die beiden Aussparungen 25, 26 verbinden. Die Zahnräder 21, 22 sind in den Seitenwänden 27, 28 zur rechten Seite hin versetzt, so daß sich die Nut 33 für das rechte Trum 31 der Zahnriemen 23 im Bereich der rechten Begrenzung der Seitenwände 27, 28 befindet. Die rechte Begrenzung der Seitenwände 27, 28 ist mit einer Rückwand 34 abgedeckt, die sich vom unteren Ende des Formdorns 13 bis zur Drehachshöhe des oberen Zahnrades 21 erstreckt. Oberhalb des oberen Zahnrades 21 ist ein Rückwandteil 35 schräg angeordnet, so daß sein oberes Ende seitlich nach hinten ausladet und sein unteres Ende teilweise zwischen die beiden Seitenwände 27, 28 ragt. Die linke Begrenzung der Seitenwände 27, 28 ist von einer Vorderwand 36 vollständig abgedeckt. Zwischen den beiden Zahnrädern 21, 22 erstreckt sich nahe der Rückwand 34 eine Zwischenwand 38, die den Hohlraum des Formdorns 13 in einen weiten Förderkanal 40 und in einen schmalen Rücklaufkanal 41 unterteilt.

Mit den beiden Zahnriemen 23 sind in gleichmäßigen Abständen die Klappen 24 schwenkbar verbunden. Die Klappen 24 haben eine Breite, die gleich der des Förderkanals 40 im Hohlraum des

...

- 5 -

Formdorns 13 ist. Ihre Weite ist jedoch größer als die Weite des Förderkanals 40, vorzugsweise um ein Drittel, so daß die in den Förderkanal 40 hineingezogenen Klappen 24 annähernd L-förmig abgewinkelt werden, wobei der Knick in der Achse der Anlenkstellen der Klappen 24 an den Zahnriemen 23 liegt. Die Klappen 24 bestehen aus einem flexiblen Werkstoff und haben im Bereich der Achse zwischen den Anlenkpunkten eine Verstärkungsrippe 44. An den Enden der Rippe 44 sind Stifte 45 eingesetzt, die in Bohrungen in den Zahnriemen 23, insbesondere jeweils im Bereich eines Zahnes der Zahnriemen 23 eingreifen. Die Dicke des von der Rippe 44 ausgehenden langen Flügels 46 einer Klappe 24 nimmmt zum Rand hin weniger stark zu als die Dicke des anderen, kurzen Flügels 47. Die Länge des kurzen Flügels 47 ist etwa ein Viertel der Länge des langen Flügels 46.

Die von den Zahnriemen 23 in den Förderkanal 40 eingeführten Klappen 24 nehmen, da die Weite des Förderkanals 40 kleiner ist als die Weite der Klappen 24 im Förderkanal eine L-förmige, rinnenartige Form an, wobei sie eine Art Becher eines Becherwerks bilden. Wenn sie nach Durchlaufen der durch das obere Zahnrad 21 gebildeten Umlenkstrecke in den Förderkanal 40 eintauchen und dabei von der Vorderwand 36 und der Zwischenwand 38 des Formdorns 13 unter Spannung geführt die beschriebene rinnenartige Form annehmen, wird eine Füllgutmenge 5 von der Abmeßeinrichtung 17 in den oben offenen Formdorn 13 abgeschüttet. Die eine Trennwand bildende Klappe 24 nimmt diese Füllgutmenge 5 während ihrer nach unten verlaufenden Bewegung auf und transportiert sie zum unteren Ende des Formdorns 13. Nach dem Durchlaufen der geradlinigen Strecke zwischen den beiden Zahnrädern 21, 22 wird beim Einlaufen der Gelenkachse der Klappe 24 in die Umlenkstrecke des unteren Zahnrades 22 der Abstand der Gelenkachse zur Vorderwand 36 größer, so daß sich die abgewinkelte Klappe 24 entspannen kann, wobei der nach oben abgewinkelte

...

- 6 -

kurze Flügel 27 der Klappe 24 durch die innere Rückstellkraft des Werkstoffs nach unten springen kann. In dieser Höhenlage erreicht die Klappe 24 mit ihrem langen Flügel 46 außerdem das untere Ende der Zwischenwand 38, so daß sich auch dieser Flügel 46 nach unten gegen die Rückwand 34 des Formdorns entspannen kann (Stellung a). Die Klappe 24 nimmt dabei wiederum eine in einer Ebene gestreckte Lage ein, wobei sich die Außenkante des kurzen Flügels 47 von der Vorderwand 36 entfernt, so daß sich die mitgeführte Füllgutmenge durch den dabei entstehenden und sich weitenden Spalt zwischen der Vorderwand 36 und dem Flügel 47 nach unten entleeren kann. Bei diesem Entleervorgang fällt die mitgeführte Füllgutmenge 5 in das die untere Öffnung des Formdorns 13 verschließende Schlauchende 3, das von den Quersiegelbacken 15, 16 gleichzeitig zum Bilden eines neuen Beutels 4 nach unten gezogen wird. Nach dem Vorziehen des Schlauches 2 um eine Beutellänge gehen die beiden Quersiegelbacken 15, 16 auseinander und kehren nach oben in ihre Ausgangsstellung zum erneuten Erfassen des Schlauches 2 zurück.

Während des Durchlaufens der unteren Umlenkstrecke liegt die Klappe 24 aufgrund des Gewichts des langen Flügels 46 mit dessen äußeren Kante an der Innenseite der Rückwand 34 an und fädelt sich mit eben dieser äußeren Kante in den Rücklaufkanal 41 zwischen der Rückwand 34 und der Zwischenwand 38 beim Einlaufen aus der Umlenkstrecke in die rechte Geradstrecke zwischen den beiden Zahnrädern 21, 22 ein (Stellung b). Beim weiteren Umlaufen der Zahnriemen 23 durchläuft die Klappe 24 den Rücklaufkanal 41, wobei ihr längerer Flügel 46 vorauseilt und mit seiner äußeren Kante an der Innenseite der Rückwand 34 gleitet. In Höhe des oberen Zahnrades 21 taucht die Klappe 24 aus dem Rücklaufkanal 41 aus, wobei der vorauslaufende Flügel 46 aus dem Spalt zwischen der Oberkante der Rückwand 34 und dem Rückwandteil 35 vorragt (Stellung c). Beim anschließenden

...

Durchlaufen der oberen durch das Zahnrad 21 gebildeten Umlenkstrecke wird die Klappe 24 verschwenkt, so daß der kurze
Flügel 47 vorauseilt (Stellung d, e). Dabei schlägt der
lange Flügel 46 der Klappe 24 an der Unterkante des Rückwandteils 35 an, wobei die Klappe 24 im Uhrzeigersinn verschwenkt
wird und ihr langer Flügel 46 an der Oberkante der Rückwand
34 aufschlägt. Beim Übergang aus der Umlenkstrecke in die anschließende Geradstrecke kommt die äußere Kante des kurzen
Flügels 47 wiederum zur Anlage mit der Innenseite der Vorderwand 36, während gleichzeitig der lange Flügel 46 nahe seiner
Außenkante auf der oberen Kante der Rückwand 34 aufliegt. Dabei werden die beiden Flügel 46, 47 der Klappe 24 nach oben
rinnenartig abgewinkelt (Stellung f), so daß die Klappe 24
wiederum in eine Lage zum Aufnehmen einer neuen Füllgutmenge
gebracht wird.

Der Abstand benachbarter Klappen 24 ist derart bemessen, daß
die zwischen zwei Klappen gebildeten Räume im Förderkanal 40
ein Volumen haben, das größer ist als das Volumen einer zu
überführenden Füllgutmenge 5. Die Zahnriemen 23 mit den Klappen 24 werden kontinuierlich im Gleichlauf mit der Abmeßeinrichtung 17 und den Quersiegelbacken 15, 16 angetrieben.

Zum synchronen Antreiben der Zahnriementriebe in der Weise,
daß die Achsen der Klappen 24 eine waagrechte Stellung einnehmen, sind die oberen Zahnräder 21 mit außerhalb des Formdorns 13 liegenden Zahnrädern 50, 51 fest verbunden, welche
mit Zahnrädern 52, 53 kämmen, die auf einer gemeinsamen, über
ein Zahnrad 55 angetriebenen Welle 56 sitzen.

Bei dem oben beschriebenen Ausführungsbeispiel ist der Formdorn 13 so ausgebildet, daß die Füllgutmengen 5 von oben her
in seine obere Öffnung abgeschüttet werden können. Der Formdorn 13 kann jedoch auch, wie in der Figur 5 dargestellt ist,
unterhalb der oberen Zahnräder 21 in einer der Seitenwände

...

- 8 -

eine Öffnung 60 haben, an die sich nach außen ein Auffangtrichter 61 anschließt. Diese Ausführungsform hat den Vorteil, daß die oberen Zahnräder und deren sie umgebenden
Spalte nicht vom Füllgut beaufschlagt werden.

Beim oben beschriebenen Ausführungsbeispiel sind zum Führen der Klappen 24 in einer ovalen Bahn zwei endlose Zahnriemen 23 als Zugmittel vorgesehen. Es ist jedoch auch denkbar, als Zugmittel Endlosketten oder -riemen zu verwenden.

R. 20369
12.12.1985 Gl/Pi

ROBERT BOSCH GMBH, 7000 STUTTGART 1

Ansprüche

1. Vorrichtung zum Herstellen von Beutelpackungen, bei der um einen im wesentlichen senkrechten Formdorn ein Packstoffband zu einem Schlauch geformt und dieser Schlauch durch Anbringen von Quernähten in einzelne Beutel unterteilt wird, und bei der im Formdorn eine Fördereinrichtung zum Überführen von am oberen Ende des Formdorns aufgegebenen Füllgutmengen in die am unteren Ende des Formdorns fertiggestellten Beutelpackungen angeordnet ist, dadurch gekennzeichnet, daß die Fördereinrichtung (20) mehrere an endlosen Zugmitteln (23) umlaufende Wände (24) hat, und daß das Formrohr (13) einen Förderkanal (40) und einen Rücklaufkanal (41) umschließt, durch die die Wände hintereinander geführt werden, wobei eine Wand den Querschnitt des Förderkanals ausfüllend jeweils eine Füllgutmenge (5) durch das Formrohr fördert.

2. Vorrichtung nach Anspruch 1, dadurch gekennzeichnet, daß der Förderkanal (40) eine größere Weite hat als der Rücklaufkanal (41), und daß die Wände (24) mit den Zugmitteln (23) gelenkig verbunden sind, wobei sie beim Übergang vom Rücklaufkanal in den Förderkanal und vom Förderkanal in den Rücklaufkanal verschwenkt werden.

3. Vorrichtung nach Anspruch 2, dadurch gekennzeichnet, daß die Wände in Form von flexiblen Klappen (24) ausgebildet sind und eine Weite haben, die größer ist als die Weite des Förderkanals (40) des Formrohrs (13), derart daß sie beim Durchzug

...

0229385

durch den Förderkanal (40) im wesentlichen eine rinnenartige Form einnehmen, wobei ihre beiden die Weite begrenzenden Kanten unter Spannung an den anliegenden Wänden (36, 38) des Förderkanals schleifen.

4. Vorrichtung nach Anspruch 3, dadurch gekennzeichnet, daß die Klappen (24) an den Zugmitteln (23) um eine zur mittleren Achse parallelen Achse angelenkt sind.

5. Vorrichtung nach einem der Ansprüche 1 bis 4, dadurch gekennzeichnet, daß die Zugmittel zwei parallel geführte Zahnriemen (23) sind, die um Umlenkräder (21, 22) am oberen und am unteren Ende des Formrohrs (13) geleitet sind.

6. Vorrichtung nach Anspruch 5, dadurch gekennzeichnet, daß die Umlenkräder (21, 22) am oberen Ende des Formrohrs (13) gemeinsam über eine Synchronisationswelle (56) angetrieben werden.

0229385

FIG.1

FIG.5

20 369

0229385

FIG.2

FIG.4

FIG.3

**Europäisches Patentamt**

**0229385**

**EUROPÄISCHER RECHERCHENBERICHT**

Nummer der Anmeldung

EP 86 11 8004

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CH-A- 652 085 (R.S. LEVY) <br> * Insgesamt * | 1,2,4 | B 65 B 9/20 <br> B 65 G 69/16 |
| Y | | 3,5 | |
| | --- | | |
| Y | DE-C- 724 818 (H. AUMUND) <br> * Seite 1, Zeilen 29-46; Figur 1 * | 3,5 | |
| | ----- | | |

**RECHERCHIERTE SACHGEBIETE (Int. Cl.4)**

B 65 B
B 65 G

Der vorliegende Recherchenbericht wurde für alle Patentansprüche erstellt.

| Recherchenort | Abschlußdatum der Recherche | Prüfer |
|---|---|---|
| DEN HAAG | 08-04-1987 | CLAEYS H.C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82